# EUROPÄISCHE PATENTSCHRIFT

(11) **EP 1 302 419 B1**
(45) Veröffentlichungstag und Bekanntmachung des Hinweises auf die Patenterteilung: **29.12.2004**
(21) Anmeldenummer: 02021504.2
(22) Anmeldetag: 26.09.2002
(51) Int. Cl.: B65G 47/82, B65G 47/08, B65G 47/51, B65H 29/38

(54) **Verfahren und Vorrichtung zum definierten Ablegen von Produkten aus einer Fächerkette**
Method and device for defined placement of products on a fan-shaped conveyor chain
Procédé et dispositif d' application définie de produits sur une chaîne transporteuse en forme d' éventail

(30) Priorität: 16.10.2001 DE 10150496
(43) Veröffentlichungstag der Anmeldung: 16.04.2003
(73) Patentinhaber: Winkler + Dünnebier Aktiengesellschaft, 56564 Neuwied (DE)
(72) Erfinder: Dennert, Martin, 56321 Brey (DE)
(74) Vertreter: Schieferdecker, Lutz, Dipl.-Ing.

(56) Entgegenhaltungen:
- EP-A- 0 308 207
- US-A- 4 067 434
- US-A- 4 399 905

## Beschreibung

Die Erfindung betrifft ein Verfahren und eine Vorrichtung zum definierten Ablegen von Produkten aus einer Fächerkette auf eine Förderstrecke mit den Merkmalen der Oberbegriffe der Ansprüche 1 und 2 (US-A-4 399 905).

Die Verwendung einer Fächerkette zum Ablegen von Produkten wie zum Beispiel von Hygieneprodukten ist aus der WO 99/18019 bekannt. Die Fächerkette umfaßt einen um Umlenkrollen endlos umlaufenden Transportgurt und weist von parallel angeordneten Zwischenwänden gebildete Fächer auf, die zur Aufnahme von zum Beispiel seitlich überstehenden Produkten dienen. Ein zum Ablegen der Produkte vorgesehenes Ausstoßelement ist vorgesehen und quer zur Bewegungsrichtung der gefüllten Fächerkette bewegbar, wobei die seitlich überstehenden Ränder der Produkte erfaßt und aus der Fächerkette geschoben werden. Sie gleiten dabei zum Beispiel auf eine Ablage oder in einen Schacht und werden sodann weitertransportiert, um schließlich verpackt zu werden.

Der Erfindung liegt die Aufgabe zugrunde, Maßnahmen vorzusehen, damit eine derartige Fächerkette nicht nur an einer ihrer Umlenkstellen mit einzelnen Produkten sehr schnell gefüllt werden kann, sondern auch im Ablagebereich wieder entleert werden kann, wobei dort jeweils mehrere Produkte gleichzeitig zu einem Stapel zusammengefaßt sind. Diese Ablage erfolgt darüber hinaus innerhalb enger, räumlicher Grenzen und muß aus diesem Grund außerordentlich schnell erfolgen.

Zur Lösung dieser Aufgabe sieht die Erfindung vor, daß eine mehrere Produkte erfassende Schiebeeinrichtung aus einer Ausgangstellung parallel mit der Fächerkette sowie gleichzeitig in Ausschieberichtung und dann wieder zurück in die Ausgangsstellung bewegt wird.

Das beziehungsweise die erfindungsgemäß vorgesehenen Ausstoßelemente bewegen sich beim Ausstoßen nicht nur in Ausstoßrichtung, sondern auch quer dazu. Es sind somit Bewegungen in Richtung der Förderkette und in Ausstoßrichtung miteinander überlagert. Dadurch ist möglich, daß das beziehungsweise die Ausstoßelemente eine genau definierte Anzahl von Produkten erfassen und sicher und zuverlässig auf eine Ablage oder in einen Schacht verschieben.

Weitere Merkmale der Erfindung gehen aus Unteransprüchen und der Beschreibung im Zusammenhang mit der Zeichnung hervor.

Die Erfindung wird nachstehend anhand eines Ausführungsbeispieles, das in der Zeichnung dargestellt ist, näher beschrieben. Dabei zeigen:
- Fig. 1:: eine perspektivische Ansicht der Fächerkette und der Vorrichtung zum Ausstoßen der Produkte in einen Schacht und
- Fig. 2:: in größerem Maßstab sowie abgeschnitten eine perspektivische Ansicht der Vorrichtung zum Ausstoßen.

Eine in den Figuren nicht dargestellte Vorrichtung zum Herstellen von Produkten und insbesondere von Hygieneprodukten 1 umfaßt eine zum Verpacken dienende Station 2, die unter anderem eine Fächerkette 3 aufweist. Die Fächerkette besteht aus einem Gurt 4 mit fächerbildenden Zwischenwänden 5. Die Fächerkette 3 läuft um Umlenkrollen 6, wobei die Zwischenwände 5 sich keilförmig öffnen. An einer der Umlenkrollen 6 wird jeweils ein Produkt in das sich öffnende Fach 7 eingeschoben und sodann in Transportrichtung der Fächerkette 3 verschwenkt. In hängender Position sowie zwischen den Zwischenwänden 5 eingeklemmt werden die Produkte 1 bis in einen Abgabebereich 8 transportiert, der gemäß Ausführungsbeispiel durch einen Schacht 9 definiert ist. Der Schacht 9 erstreckt sich mit seiner Längsachse quer zur Transportrichtung des mit Produkten 1 gefüllten Teiles 10 der Fächerkette 3.

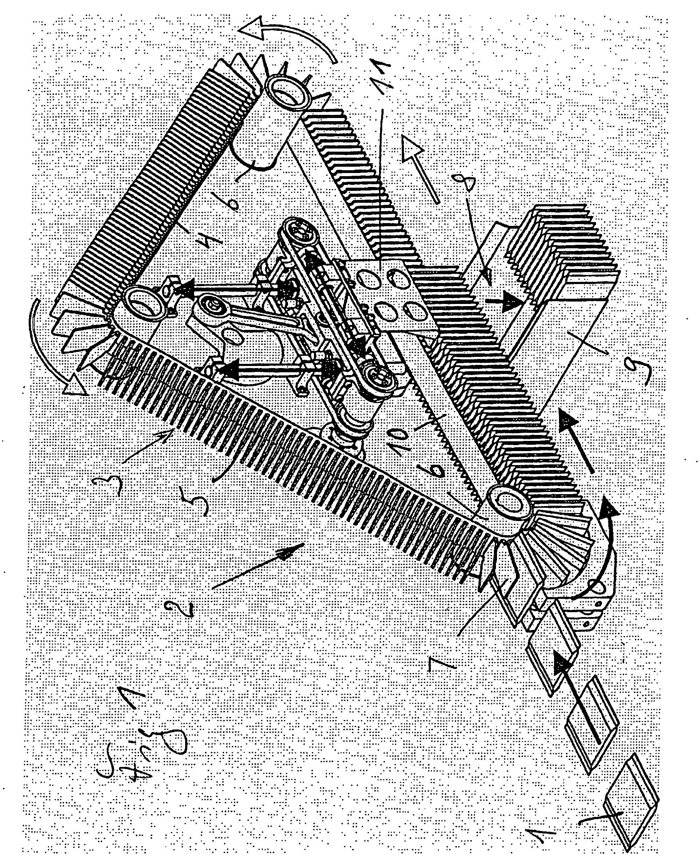

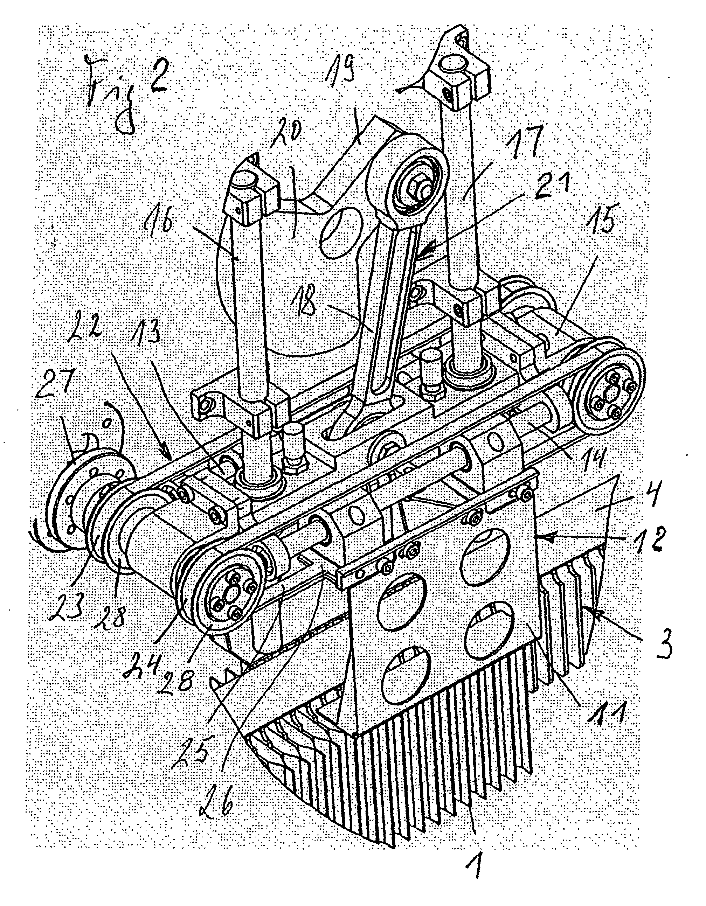

Die Produkte 1 stehen in den seitlich offenen Fächern 7 ebenfalls seitlich über die Fächer vor, wie dies in den Figuren 1 und 2 dargestellt ist. Dadurch ist es möglich, die Produkte 1 mit Hilfe von Ausstoßelementen 11 aus den Fächern 7 heraus nach unten zu drücken.

Jedes Ausstoßelement besitzt eine Breite derart, daß mehrere und nicht nur ein einziges Produkt gleichzeitig aus Fächern 7 herausgeschoben werden können.

Der sich quer zur Bewegungsrichtung des Teiles 10 der Fächerkette 3 erstreckende Schacht 9 befindet sich unterhalb der Fächerkette 3, so daß die Produkte aus der Fächerkette 3 in den Schacht 9 aufgrund der Schwerkraft gleiten.

Die Vorrichtung zum Ausschieben der Produke 1 der Fächerkette 3 umfaßt eine Schiebeeinrichtung 12 mit den zu beiden Seiten des Gurtes 4 angeordneten Ausstoßelementen 11. Beim Ausschieben oder Ausstoßen drücken die im Querschnitt I-förmigen Ausstoßelemente 11 auf die seitlich aus den Fächern 7 ausgreifenden Ränder der Produkte 1.

Die Schiebeeinrichtung 12 erfaßt mehrere Produkte 1 und ist aus einer Ausgangsstellung parallel mit der Fächerkette 3 sowie gleichzeitig in Ausschieberichtung und sodann wieder zurück in die Ausgangsstellung bewegbar (Fig. 2).

Die Ausstoßelemente 11 sind längs zweier Führungsstangen 13 und 14 parallel zur Förderkette 3 beziehungsweise ihrem die Produkte 1 tragenden Teil 10 bewegbar. Die Führungsstangen 13 und 14 sind ihrerseits an einem Träger 15 angeordnet, der seinerseits längs zweier Führungsstangen 16 und 17 in Ausstoßrichtung bewegbar ist. Dadurch ist es möglich, daß die mehrere Produkte 1 erfassende Schiebeeinrichtung 12 aus ihrer Ausgangsstellung parallel mit der Förderkette 3 sowie gleichzeitig in Ausschieberichtung und sodann wieder zurück in die Ausgangsstellung bewegt werden kann beziehungsweise bewegbar ist.

Die Hubbewegungen des Trägers 15 werden erreicht mit Hilfe einer Pleuelstange 18, die einerseits an dem Träger 15 und andererseits an einem Arm 19 eines Antriebes (nicht dargestellt) angelenkt ist. Zu dem Arm 19 gehört ein Ausgleichs- und Gegengewicht 20. Zusammen bilden diese Teile einen Pleuelantrieb 21.

Die parallel zur Fächerkette 3 erfolgenden Bewegungen der Schiebeeinrichtung 12 werden mit Hilfe eines Gurtantriebes 22 erzielt. Er umfaßt zwei Antriebsgurte 23 und 24, die um Umlenkrollen 28 am Träger 15 laufen und eine hin- und hergehende Bewegung der Schiebeeinrichtung 12 ermöglichen. Jeweils ein Trumm 25 der beiden Antriebsgurte 23 beziehungsweise 24 ist mit Hilfe von Mitnehmern 26 mit den Ausstoßelementen 11 verbunden und auf den beiden Führungsstangen 13 und 14 geführt.

Ein in den Figuren nicht dargestellter, motorischer Antrieb ist sowohl für den Träger 15 als auch für die anderen, beweglichen Teile maschinenseitig vorgesehen.

Eine Universal-Kraftübertragung zum Beispiel in Gestalt einer Gelenkwelle oder gemäß der Darstellung in den Figuren in Gestalt einer Schmitt-Kupplung 27 gestattet es, daß die um Umlenkrollen 28 an den Träger 15 umlaufenden Antriebsgurte 23 und 24 jeweils kurzzeitige hin- und hergehende Bewegungen ausführen.

## Patentansprüche

1. Verfahren zum definierten Ablegen von Produkten aus einer Fächerkette (3) auf eine Ablage oder in einen Schacht (9), wobei die Fächerkette (3) von parallelen Zwischenwänden (5) gebildete und seitlich offene Fächer (7) zur Aufnahme von seitlich überstehenden Produkten (1) aufweist,
**dadurch gekennzeichnet, daß** eine mehrere Produkte (1) erfassende Schiebeeinrichtung (12) aus einer Ausgangsstellung parallel zu der Förderkette (3) sowie gleichzeitig in Ausschieberichtung und sodann wieder zurück in die Ausgangsstellung bewegt wird.

2. Vorrichtung zum definierten Ablegen von Produkten (1) aus einer Fächerkette (3) auf eine Ablage beziehungsweise in einen Schacht (9), wobei die Fächerkette (3) von parallelen Zwischenwänden (5) gebildete und seitlich offene Fächer (7) zur Aufnahme von seitlich überstehenden Produkten (1) aufweist,
**dadurch gekennzeichnet, daß** eine mehrere Produkte (1) erfassende Schiebeeinrichtung (12) aus einer Ausgangsstellung parallel mit den Produkten (1) in der Förderkette (3) sowie gleichzeitig in Ausschieberichtung und sodann wieder zurück in die Ausgangsstellung bewegt wird.

3. Vorrichtung nach Anspruch 2, **gekennzeichnet durch** einen quer zur Bewegungsrichtung der Fächerkette (3) bewegbaren Träger (15), der mindestens ein in Bewegungsrichtung der Fächerkette (3) und zurück bewegbares Ausstoßelement (11) aufweist.

4. Vorrichtung nach Anspruch 2 und 3, **dadurch gekennzeichnet, daß** der Träger (15) und das/die Ausstoßelemente (11) längs Führungsstangen (13,14 sowie 16 und 17) bewegbar sind.

5. Vorrichtung nach mindestens einem der vorhergehenden Vorrichtungsansprüche, **dadurch gekennzeichnet, daß** ein Pleuelantrieb (21) für die Hubbewegung des Trägers (15) vorgesehen ist.

6. Vorrichtung nach mindestens einem der vorhergehenden Vorrichtungsansprüche, daß zwei parallele Antriebsgurte (23, 24) für die Ausstoßelemente (11) vorgesehen sind.

7. Vorrichtung nach mindestens einem der vorhergehenden Vorrichtungsansprüche, daß ein motorischer Antrieb für die am Träger (15) angeordneten, beweglichen Teile maschinenseitig vorgesehen ist.

8. Vorrichtung nach mindestens einem der vorhergehenden Vorrichtungsansprüche, daß die Antriebselemente eine Universal-Kraftübertragung, beziehungsweise eine Gelenkwelle und vorzugsweise eine Schmitt-Kupplung (27) umfaßt.

9. Vorrichtung nach mindestens einem der vorhergehenden Vorrichtungsansprüche, **dadurch gekennzeichnet, daß** das/die Ausstoßelemente (11) seitlich über den Träger (15) vorsteht/vorstehen.

10. Vorrichtung nach mindestens einem der vorhergehenden Vorrichtungsansprüche, daß Umlenkrollen (28) am Träger (15) für die Antriebsgurte (23, 24), die zum Bewegen der Ausstoßelemente (11) dienen, vorgesehen sind.

## Claims

1. Process for defined placement of products displaced from a fan-type chain (3) and onto a surface or into a chute (9), wherein the fan-type chain (3) is formed by intermediate, parallel partitions (5) and compartments (7) open at the sides to accept products (1) which overhang at the sides,
**characterised by** a pusher device (12) engaging multiple products (1) being moved, from a home position, parallel to the fan-type chain (3) and at the same time in the ejection direction and then back into the home position.

2. Device for defined placement of products (1) moved out of a fan-type chain (3) and onto a surface and/or into a chute (9), wherein the fan-type chain (3) is formed by intermediate, parallel partitions (5) and compartments (7) open at the sides to accept products (1) which over-hang at the sides,
**characterised by** a pusher device (12) engaging multiple products (1) being moved, from a home position, parallel to the products (1) held in the fan-type chain (3) and at the same time in the ejection direction and then back into the home position.

3. Device in accordance with Claim 2, **characterised by** a travelling carrier (15) which is movable perpendicular to the direction of movement for the fan-type chain (3) and which exhibits at least one ejector element (11) which is movable in the direction of movement of the fan-type chain (3) and back.

4. Device in accordance with Claims 2 and 3, **characterised by** the carrier (15) and the ejection element(s) (11) being movable along guide rods (13, 14 as well as 16 and 17).

5. Device in accordance with at least one of the foregoing Device Claims, [characterised by] a crankshaft drive (21) being provided for the reciprocating motion of the carrier (15).

6. Device in accordance with at least one of the foregoing Device Claims, **characterised by** two parallel drive belts (23, 24) being provided for the ejector elements (11).

7. Device in accordance with at least one of the foregoing Device Claims, **characterised by** a motorised drive being provided in the machinery for the movable components located on the carrier (15).

8. Device in accordance with at least one of the foregoing Device Claims, **characterised by** the drive elements incorporating a universal power transmission joint and/or a cardan shaft and preferably a Schmidt coupling (27).

9. Device in accordance with at least one of the foregoing Device Claims, **characterised by** the ejector element(s) (11) extending laterally beyond the carrier (15).

10. Device in accordance with at least one of the foregoing Device Claims, **characterised by** reversing rollers (28) being provided at the carrier (15) for the drive belts (23, 24) which serve to move the ejector elements (11 ).

## Revendications

1. Procédé destiné à la déposition définie sur un bâti de stockage ou dans un entonnoir (9) de produits provenant d'une chaîne de compartiments (3), celle-ci présentant des compartiments ouverts latéralement (7) et formés de parois intermédiaires parallèles (5) pour la réception de produits dépassant latéralement (1),
**caractérisé par le fait qu'**un dispositif poussoir (12) pouvant saisir plusieurs produits (1) est déplacé depuis une position initiale parallèlement à la chaîne de transport (3) et, en même temps, dans le sens de l'évacuation, puis ramené de nouveau en position initiale.

2. Dispositif destiné à la déposition définie sur un bâti de stockage ou un entonnoir (9) de produits (1) provenant d'une chaîne de compartiments (3), celle-ci présentant des compartiments ouverts latéralement (7) et formés de parois intermédiaires parallèles (5) pour la réception de produits dépassant latéralement (1),
**caractérisé par le fait qu'**un dispositif poussoir (12) pouvant saisir plusieurs produits (1) est déplacé depuis une position initiale parallèlement avec les produits (1) dans la chaîne de transport (3) et, en même temps, dans le sens de l'évacuation, puis ramené de nouveau en position initiale.

3. Dispositif selon la revendication 2, **caractérisé par** un support (15), déplaçable dans le sens transversal par rapport au mouvement de la chaîne à compartiments (3), présentant au moins un élément d'éjection mobile (11) dans le sens du mouvement de la chaîne à compartiments (3) et dans le sens du retour.

4. Dispositif selon les revendications 2 et 3, **caractérisé par le fait que** le support (15) et le ou les éléments d'éjection (11) peuvent se déplacer le long des barres de guidage (13, 14 ainsi que 16, 17).

5. Dispositif selon au moins l'une des revendications susnommées, **caractérisé par le fait qu'**un entraînement à bielle (21) est prévu pour la course du support (15).

6. Dispositif selon au moins l'une des revendications susnommées, **caractérisé par le fait que** deux courroies parallèles (23, 24) sont prévues pour les éléments d'éjection (11).

7. Dispositif selon au moins l'une des revendications susnommées, **caractérisé par le fait qu'**un entraînement à moteur est prévu côté machine pour les pièces mobiles disposées à hauteur du support (15).

8. Dispositif selon au moins l'une des revendications susnommées, **caractérisé par le fait que** les éléments d'entraînement comprennent une transmission de force universelle, un arbre articulé ou, de préférence, un embrayage du type Schmidt (27).

9. Dispositif selon au moins l'une des revendications susnommées, **caractérisé par le fait que** le ou les éléments d'entraînement (11) dépassent latéralement par-dessus le support (15).

10. Dispositif selon au moins l'une des revendications susnommées, **caractérisé par le fait que** des galets de renvoi (28) sont prévus à hauteur du support (15) pour les courroies d'entraînement (23, 24) qui servent à déplacer les éléments d'éjection (11).
